# EUROPÄISCHE PATENTANMELDUNG

(11) **EP 0 889 436 A2**
(43) Veröffentlichungstag der Anmeldung: **07.01.1999**
(21) Anmeldenummer: 98111789.8
(22) Anmeldetag: 26.06.1998
(51) Int. Cl.: G06K 19/077

(54) **Transponderanordnung und Verfahren zu deren Herstellung**

(30) Priorität: 04.07.1997 DE 19728512
(71) Anmelder: AEG Identifikationssysteme GmbH, 89077 Ulm (DE)
(72) Erfinder: Bloch, Werner, 73054 Eislingen (DE)
(74) Vertreter: Weber, Gerhard

(57) **Zusammenfassung**

Die Erfindung betrifft eine Transponderanordnung, die eine Spule aufweist, deren Wicklungsenden mit einem integrierten Schaltkreis verbunden sind, der auf einem Substrat aufgebracht ist. Um eine räumliche Anordnung von Spule und Substrat zu erzielen, die robust und mechanisch belastbar ist, wird nach der Erfindung vorgeschlagen, die Spule als Luftspule auszubilden und direkt auf der Luftspule das Substrat (mit dem integrierten Schaltkreis nach unten) zu befestigen, z. B. zu kleben. Eine solche Transponderanordnung kann vorteilhaft zur Kennzeichnung von Behältern mit eine Einfüllöffnung des Behälters umschließende Transponderspule eingesetzt werden.

## Beschreibung

Die Erfindung betrifft eine Transponderanordnung gemäß Oberbegriff des Patentanspruchs 1 sowie ein Verfahren zu deren Herstellung gemäß Oberbegriff des Patentanspruchs 17.

Transponderanordnungen dieser Art werden heutzutage in den unterschiedlichsten Anwendungen eingesetzt, um Objekte identifizieren zu können. Hierzu wird eine solche Transponderanordnung am Objekt angebracht und mit Hilfe eines Schreibgeräts Daten, die das Objekt kennzeichnen, in einen elektronischen Speicher der Transponderanordnung eingeschrieben. Zu einem späteren Zeitpunkt werden diese Daten oder ein Teil davon mit Hilfe eines Lesegerätes wieder aus dem elektronischen Speicher der Transponderanordnung herausgelesen und zur Auswertung beispielsweise einer Datenverarbeitungsanlage zugeführt. Häufig werden beim Lesevorgang parallel oder zeitlich versetzt neue oder zusätzliche Daten in den elektronischen Speicher der Transponderanordnung geschrieben. In einem solchen Fall wird anstelle des einfachen Lesegeräts ein kombiniertes Lese-/Schreibgerät verwendet.

Die Kommunikation zwischen Transponderanordnung auf der einen Seite und Lese- und/oder Schreibgerät auf der anderen Seite geschieht per induktiver Kopplung. Die Daten werden dabei in der Regel in Form eines modulierten hochfrequenten Magnetfeldes gegebenenfalls verschlüsselt übertragen. Die Signale können dabei in analoger oder
digitaler Form vorliegen. Beim Schreibvorgang erzeugt das Schreibgerät hochfrequente Magnetfelder, die die zu speichernden Daten enthalten und die von der Transponderanordnung empfangen und danach im elektronischen Speicher der Transponderanordnung abgelegt werden. Beim Lesevorgang erzeugt die Transponderanordnung nach einer entsprechenden Initialisierung durch das Lesegerät hochfrequente Magnetfelder, die die gespeicherten Daten oder einen Teil davon enthalten, und die vom Lesegerät empfangen und zur Auswertung weiterverarbeitet werden.

Die Funktionsweise und der prinzipielle elektrische Aufbau (Blockschaltbild) solcher Transponderanordnungen sind allgemein bekannt und sollen daher hier, da dies auch nicht Gegenstand der vorliegenden Erfindung ist, nicht näher erläutert werden.

Verwendet werden solche Transponderanordnungen z. B. in sogenannten RF-Identsystemen (RF = Radio Frequency oder Hochfrequenz), die z. B. bei der Müllentsorgung zur Erfassung der Mülltonnenentleerungsdaten (Tag der Entleerung, Müllgewicht, Müllvolumen etc.) bei den einzelnen Mülltonnen oder zur Identifikation von Analyseprobebehältern im chemischen oder pharmazeutischen oder medizinischen Bereich eingesetzt werden.

Aus der DE 195 23 521 A1 ist eine Transponder-Drahtspule bekannt, bei welcher ein Spulenkörper für die Drahtspule zugleich als Träger für einen Schaltkreis dient. Die DE 196 22 387 zeigt eine Transponderanordnung, bei welcher eine Spule auf einen flachen Trägerkörper gewickwlt ist. Auf oder in dem Trägerkörper ist ein Schaltkreis vorgesehen. Bei einem aus der DE 195 49 343 A1 bekannten Transponder ist eine Spule als spiralförmige Rückseitenmetallisierung des Schaltkreissubstrats realisiert. Die DE 196 14 914 A1 und die DE 44 31 605 A1 beschreiben Transponderanordnungen in Form von Chipkarten, bei welchen ein Schaltkreissubstrat gemeinsam mit einer Antenne zwischen einen Kartenkörper bildenden Deckfolien eingeschlossen ist. Der Kartenkörper übernimmt die mechanisch stabilisierende und tragende Funktion.

Häufig sind Transponderanordnungen dieser Art hohen mechanischen Belastungen ausgesetzt, die einen robusten mechanischen Aufbau diese Anordnungen erfordern. Ferner werden in vielen Anwendungen spezielle räumliche Anforderungen gestellt, die nur mit sehr kompakten Aufbauten solcher Transponderanordnungen zu erfüllen sind.

Die Aufgabe der Erfindung besteht daher darin, einerseits eine Transponderanordnung anzugeben, die zum einen sehr robust gegenüber mechanischen Belastungen sein sollte und zum anderen auch einen sehr kompakten Aufbau erlauben sollte, und andererseits ein Verfahren anzugeben, mit dem eine solche Transponderanordnung möglichst kostengünstig hergestellt werden kann.

Die erfindungsgemäße Lösung der Aufgabe ist in Bezug auf die zu schaffende Transponderanordnung durch die Merkmale des Patentanspruchs 1 wiedergegeben und in Bezug auf das zu schaffende Herstellungsverfahren durch die Merkmale des Patentanspruchs 17. Die übrigen Ansprüche enthalten vorteilhatte Aus- und Weiterbildungen der erfindungsgemäßen Transponderanordnung (Ansprüche 2 bis 16) sowie des erfindungsgemäßen Herstellungsverfahrens für eine solche Transponderanordnung (Ansprüche 18 bis 24).

Mit der Befestigung/Klebung des Substrats mit dem integrierten Schaltkreis auf der Luttspule liegt eine sehr robuste und gegenüber mechanischen Belastungen unempfindliche Transponderanordnung vor, die infolge ihres einfachen Aufbaus und ihrer einfachen Herstellung sehr kostengünstig produziert werden kann. Vorzugsweise ist der Schaltkreis direkt, insbesondere mittels einer Kleberschicht auf den Spulenwicklungen befestigt.

Die Spule ist vorzugsweise als gewickelte Drahtspule ausgeführt, welche eine weitaus höhere Windungszahl ermöglicht als eine Spulenspiralstruktur auf einem Substrat. Die Luftspule ist vorteilhafterweise selbsttragend ohne Substrat oder Spulenträger ausgeführt.

Mit der festen Verbindung Substrat/Luftspule kann der empfindliche integrierte Schaltkreis auf einfache Art und Weise vor mechanischer Zerstörung geschützt werden. Dies ist insbesondere dann der Fall, wenn das Substrat mit seiner Schaltkreis-Seite mit der Luftspule verklebt wird ( 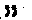 Face-Down-Technik"). Allerdings ist es auch möglich, das Substrat mit seiner andere Seite (der 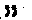 Unterseite" ohne Schaltkreisstrukturen) mit der Luftspule zu verkleben.

Die Luftspule ist gemäß einer besonders vorteilhaften Ausführungsform als flache Spule mit gegenüber ihrer Querausdehnung in der Spulenfläche kleiner Dicke senkrecht zur Spulenfläche ausgeführt. Die Breite des von der Spule beanspruchten Ringabschnitts um eine zentrale Öffnung liegt bevorzugt im Bereich von 10%, insbesondere 30 % bis 90%, insbesondere 70 % des äußeren Spulenradius. Insbesondere ist es vorteilhaft, wenn die Ringbreite der Spule mindestens so groß ist wie die Ausdehnung des Substrats in radialer Richtung der Anordnung.

Ein weiterer Vorteil besteht darin, daß die von der konzentrisch gewickelten Luftspule umgebene Öffnung frei von Bauteilen der Transponderanordnung ist und deshalb optimal für andere Zwecke genutzt werden kann (z. B. zum Durchführen von Teilen oder Materialien).

Besonders vorteilhaft hat sich die erfindungsgemäße Transponderanordnung in RF-Indentsystemen zur Identifikation von Behältern erwiesen, weil durch die Öffnung der Luftspule problemlos die Behälter befüllt oder entleert werden können bzw. Proben aus ihnen entnommen werden können. Insbesondere kann die Spulenöffnung einen Einfüllstutzen, Flaschenhals oder dergleichen umschließen und damit beim Einfüllen oder Entnehmen auf den in unmittelbarer Nähe vorliegenden Transponder zugegriffen werden.

Im folgenden wird die Erfindung anhand der Figuren näher erläutert. Es zeigen
- FIG. 1:: eine bevorzugte Ausführungsform der erfindungsgemäßen Transponderanordnung vor der Verklebung des Substrats mit der Luftspule in einer Seitenansicht,
- FIG. 2:: die Transponderanordnung gemäß FIG. 1 in der Draufsicht (nicht maß stäblich),
- FIG. 3:: eine weitere bevorzugte Ausführungsform der erfindungsgemäßen Transponderanordnung in einem Gehäuse im Querschnitt.

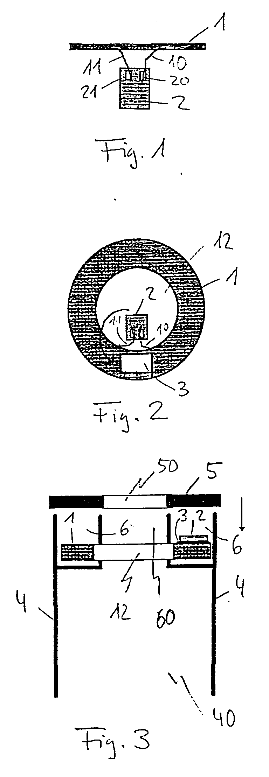

Die Transponderanordnung in FIG. 1 besteht aus einer konzentrisch gewickelten flachen Luftspule 1, die in der Figur von der Seite gezeigt ist und deren Wicklungsenden (Drahtenden) 10, 11 mit Anschlußflecken 20, 21 (z. B. aus Aluminium oder Gold oder Nickel usw.) verbunden sind, die auf einem Substrat 2 aufgebracht sind. Auf dem Substrat 2 befindet sich ferner der (nicht gezeigte) elektronische Schaltkreis, der mit den beiden Anschlußflecken 20, 21 elektrisch verbunden ist.

In FIG. 2 ist die Transponderanordnung gemäß FIG. 1 von oben gezeigt (allerdings nicht maßstäblich). Hier ist nun eine Klebeschicht 3 zu erkennen (z. B. ein doppelseitig klebendes Klebeband oder ein mit einem Kleber getränktes Gewebe (z. B. Glasfasergewebe) oder eine Klebeschicht oder eine Schicht aus Vergußmaterial (z. B. Kunstharz- oder Epoxydharzmaterial)), auf die in einem anschließenden Herstellungsverfahrensschritt dann das Substrat 2 mit der Seite mit dem integrierten Schaltkreis nach unten gedrückt wird (wie in der Figur durch den Pfeil angedeutet). Die von der Luftspule 1 umgebene Öffnung ist in FIG. 2 mit 12 bezeichnet.

In den FIG. 1 und 2 ist die Transponderanordnung in einem Zwischenstadium bei der Herstellung gezeigt, bei dem die bereits fertiggewickelte Luftspule 1 an ihren Wicklungsenden 10, 11 bereits mit dem Substrat 2 verbunden ist (z. B. mittels eines direkten Bondverfahrens wie z. B. eines Thermokompressions- oder Ultraschallschweißverfahrens( 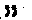 Thermosonic"- oder 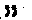 Ultrasonic"-Bondverfahren)), aber das Substrat 2 noch nicht auf die Spule 1 geklebt worden ist.

In FIG. 3 dagegen ist die Transponderanordnung nach ihrer Fertigstellung und Einbringung in eine Spezialgehäuse im Querschnitt zu sehen.

Zu sehen ist die Luftspule 1 im Querschnitt, das Substrat 2, das - mit der Schaltkreisseite nach unten - mittels der Klebeschicht 3 mit der Luftspule 1 verklebt ist. Luftspule 1 und Substrat 2 befinden sich in einer Aufnahme 6 eines Gehäuses 4, die in ihrer Kontur der Kontur der Transponderanordnung 1-3 angepaßt ist. Verschlossen wird die Aufnahme 6 nach Einbringung der Transponderanordnung 1-3 durch einen Deckel 5, der z. B. mittels eines Ultraschallschweißverfahrens fest mit dem Gehäuse verbunden wird. Sowohl Deckel 5 als auch das Gehäuse 4 weisen jeweils eine Öffnung 50, 60 auf, die konzentrisch mit der Öffnung 12 der Luftspule 1 übereinander angeordnet sind, so daß dadurch ein Kanal durch das Gehäuse hindurch entsteht, durch den Objekte bzw. Materialien hindurchgeführt werden können. Das Gehäuse ist für RF-Identsysteme zur Kennzeichnung von Behältern mit schlanken Einfüllöffnungen wie Einfullstutzen, Flaschenhals oder dgl. besonders vorteilhaft.

Das Gehäuse 4 wird bei diesen Systemen mit der unteren weiten Öffnung 40 direkt auf einen (in der Figur nicht gezeigten) Behälter (z. B. Flasche, Reagenzglas) gesteckt. Durch den Kanal 50, 60, 12, 40 kann dann problemlos der Behälter befüllt oder entleert werden oder Proben aus ihm entnommen werden, ohne daß hierzu die Transponderanordnung entfernt werden müßte.

Die zuvor beschriebene gehäuste Transponderanordnung wird wie folgt hergestellt:

Zunächst wird mittels eines herkömmlichen Wickelwerkzeugs die flache Luftspule 1 als konzentrisch gewickelte Spule gewickelt. Der Spulendraht ist mit einem Backlack umgeben, der während des Wickelns oder nach dem Wikkeln der Spule erwärmt wird. Dabei werden die einzelnen Windungen der Spule (die aus einer oder mehreren Lagen von schneckenhausartig gewickelten Windungen bestehen kann) miteinander verbacken und bilden nach dem Erkalten einen starren, mechanisch belastbaren Spulenkörper, der mit Hilfe entsprechender Preßwerkzeuge oder mit Hilfe des Wickelwerkzeuges derart in Form gebracht wird, daß der verbackene Spulenkörper insgesamt die Form einer Unterlegscheibe mit zwei Flachseiten annimmt.

Die Drahtenden 10, 11 der Spule werden nach dem Wickel-, Back- und Preßvorgang mit Hilfe eines Direkt-Bond-Verfahrens (z. B. Thermokompressions- oder Ultraschallschweißverfahren ( 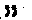 Thermosonic"- oder 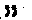 Ultrasonic"-Bondverfahren)) mit den Aluminium-Anschlußflecken 20, 21 auf dem Substrat 2 verbunden, die ihrerseits mit dem integrierten Schaltkreis auf dem Substrat 2 verbunden sind. Der integrierte Schaltkreis enthält neben der Transponderelektronik (u. a. dem Funk-Sender/Empfänger und dem Datenspeicher) in der Regel auch einen Kondensator (mit einer Kapazität von z. B. 200 pF), der zusammen mit der Luftspule 1 einen auf die Sende- bzw. Empfangsfrequenz abgestimmten Resonanzkreis bildet (die Spule 1 dient als Sende/Empfangsantenne der Transponderanordnung).

Nach Abnahme eines Teils des Wickelwerkzeugs wird auf der einen Flachseite der Luftspule 1 eine Klebeschicht 3 aufgebracht, die als ein dünnes, elektrisch nichtleitendes, Unebenheiten auf der Spule 1 bzw. dem Substrat 2 ausgleichendes Medium dient, das das Substrat 2 mit der Luftspule 1 dauerhaft verbindet.

Als Klebeschicht kann z. B. ein klebergetränktes Gewebe, z. B. Glasfasergewebe ( 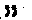 Klebepreprag"), verwendet werden oder ein doppelseitig klebendes Klebeband oder eine Schicht aus Vergußmaterial aus Kunstharz oder Epoxydharz oder eine Schicht aus einem flüssigen Klebematerial. Die Fläche der Klebeschicht 3 kann dabei größer, gleich oder kleiner sein als die Fläche des Substrats 2. Auf die Klebeschicht 3 wird anschließend das Substrat 2 mit der Schaltkreisseite nach unten ( 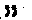 Face Down") oder mit der gegenüberliegenden Seite ( 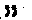 Unterseite") nach unten aufgebracht bzw. eingedrückt. Nach Abschluß des Klebevorgangs ist damit das Substrat 2 dauerhaft mit der Luftspule 1 verbunden. Diese Einheit kann bei Bedarf zwischen zwei flexiblen Folien einlaminiert werden oder in einer HF-durchlässigen Plastikschicht vergossen werden, die anschließend zu einem starren Körper erstarrt.

Die Gesamtstärke einer solchen Transponderanordnung liegt typisch zwischen 0,1 mm und einigen Millimetern (z. B. 0,5 mm oder 1 mm).

Die gegebenenfalls mit Folie oder einer Plastikschicht umgebene Einheit aus Luftspule 1, Klebeschicht 3 und Substrat 2 mit Schaltkreis wird in dem in FIG. 3 gezeigten Ausführungsbeispiel in die Aufnahme 6 des Gehäuses 4 gelegt und gegebenenfalls mit einem weiteren Folienkörper abgedeckt. Die Aufnahme 6 ist dabei so gestaltet, daß sie die Luftspule 1 mit Substrat 2 vollständig aufnimmt und gegebenenfalls kraft- und/oder formflüssig mit ihr verbindet. Die Aufnahme 6 wird anschließend mit dem Deckel 5 verschlossen, der z. B. mit Hilfe eines Ultraschallschweißverfahrens unlösbar mit dem Gehäuse 4 verbunden wird. Das Gehäuse 4 wird anschließend mit der unteren weiteren Öffnung 40 auf den (nicht gezeigten) Behälter aufgesteckt.

Es versteht sich, daß die Erfindung nicht auf die beschriebene Ausführungsbeispiele beschränkt ist, sondern vielmehr auf weitere übertragbar ist. So ist es z. B. denkbar, anstelle der gezeigten ringförmigen Spulen andere Spulenformen zu wählen (z. B. dreieckförmige, rechteckförmige, ellipsenförmige, quadratische oder n-eckförmige Spulenkörper mit n > 4).

## Patentansprüche

1. Transponderanordnung, die eine Spule aufweist, deren Wicklungsenden mit einem integrierten Schaltkreis verbunden sind, der auf einem Substrat aufgebracht ist, dadurch gekennzeichnet, daß die Spule als Luftspule ausgebildet und daß das Substrat (2) mit dem integrierten Schaltkreis auf der Luftspule (1) befestigt ist.

2. Transponderanordnung nach Anspruch 1, dadurch gekennzeichnet, daß die Luftspule (1) als konzentrisch gewickelte Flachspule ausgebildet ist.

3. Transponderanordnung nach Anspruch 2, dadurch gekennzeichnet, daß die Luftspule (1) als starre Flachspule mit miteinander verklebten oder verbackenen Draht- oder Bandwindungen realisiert ist.

4. Transponderanordnung nach Anspruch 2 oder 3, dadurch gekennzeichnet, daß die Luftspule (1) die äußere Form einer Unterlegscheibe aufweist.

5. Transponderanordnung nach Anspruch 4, dadurch gekennzeichnet, daß die Luftspule (1) die äußere Form einer ring- oder ellipsenförmigen oder rechteckigen oder quadratischen oder vieleckigen Unterlegscheibe aufweist.

6. Transponderanordnung nach einem der vorhergehenden Ansprüche, dadurch gekennzeichnet, daß die Luftspule (1) mit ihrem beiden Wickelenden (10, 11) an metallische und auf dem Substrat (2) angeordnete und mit dem integrierten Schaltkreis in Verbindung stehende Anschlußflecken (20, 21) vorzugsweise aus Aluminium oder Gold oder Nickel angeschlossen ist.

7. Transponderanordnung nach einem der vorhergehenden Ansprüche, dadurch gekennzeichnet, daß zwischen Luftspule (1) und Substrat (2) mit dem integrierten Schaltkreis ein nichtleitendes, dünnes, Konturen- und Höhenunterschiede in der Struktur ausgleichendes Medium (3) vorgesehen ist, das die Luftspule (1) mit dem Substrat (2) oder mit dem integrierten Schaltkreis auf dem Substrat (2) dauerhaft verbindet.

8. Transponderanordnung nach Anspruch 7, dadurch gekennzeichnet, daß das Medium (3) eine elektrisch nichtleitende Klebeschicht ist.

9. Transponderanordnung nach Anspruch 8, dadurch gekennzeichnet, daß die Klebeschicht (3) in Form eines mit einem Kleber getränkten Gewebes, vorzugsweise Glasfasergewebe, oder in Form eines doppelseitig klebenden Klebebandes oder in Form einer nach der Aufbringung aushärtenden Klebemasse, vorzugsweise bestehend aus einem Elektronikschaltungskleber, oder in Form einer nach der Aufbringung aushärtenden Vergußmaterialmasse, vorzugsweise bestehend aus einem Kunstharz- oder Epoxydharzmaterial, realisiert ist.

10. Transponderanordnung nach einem der vorhergehenden Ansprüche, dadurch gekennzeichnet, daß das Substrat (2) auf seiner den integrierten Schaltkreis tragenden Seite mit der Luftspule (1) verbunden ist.

11. Transponderanordnung nach Anspruch 10, dadurch gekennzeichnet, daß bei einer in Form einer Flachspule realisierten Luftspule (1) das Substrat (2) auf einer der beiden Flachseiten der Luftspule (1) befestigt ist, dergestalt, daß die Substratseite mit dem integrierten Schaltkreis zwischen Luftspule (1) und Substrat (2) angeordnet ist.

12. Transponderanordnung nach einem der vorhergehenden Ansprüche, dadurch gekennzeichnet, daß die Anordnung aus Luftspule (1) Substrat (2) mit integriertem Schaltkreis und Klebeschicht (3) zwischen zwei Folien einlaminiert ist.

13. Transponderanordnung nach einem der vorhergehenden Ansprüche, zur Kennzeichnung von Objekten, dadurch gekennzeichnet, daß ein die Transponderanordnung (1, 10, 11, 2, 20, 21, 3) enthaltendes Gehäuse (4-6) an dem Objekt angebracht ist.

14. Transponderanordnung nach Anspruch 13, dadurch gekennzeichnet, daß das Gehäuse (4-6) eine der Kontur der Luftspule (1) entsprechende Aufnahme (6) aufweist, in die die Luftspule (1) und das Substrat (2) vollständig eingebracht sind und die mit einem Deckel (5) vollständig verschlossen ist.

15. Transponderanordnung nach Anspruch 14, dadurch gekennzeichnet, daß die Luftspule (1) als ringförmige Flachspule ausgebildet ist, die in der entsprechend ringförmig ausgebildeten Aufnahme (6) vorzugsweise kraft- und/oder formflüssig eingebracht ist.

16. Transponderanordnung nach Anspruch 15, dadurch gekennzeichnet, daß die Aufnahme (6) eine erste kreisförmige Öffnung (60) umschließt und der Deckel (5) eine zweite kreisförmige Öffnung (50) umschließt, und daß die Mittelpunkte der beiden Öffnungen (50, 60) übereinander angeordnet sind.

17. Verfahren zur Herstellung einer Transponderanordnung nach einem Ansprüche 1 bis 12, welche Transponderanordnung eine Luftspule enthält, deren Wicklungsenden mit einem integrierten Schaltkreis verbunden sind, der auf einem Substrat aufgebracht ist, dadurch gekennzeichnet,
- daß die Luftspule als konzentrisch gewickelte Flachspule (1) gewickelt wird;
- daß anschließend die beiden Wickelenden (10, 11) der Flachspule (1) mittels eines Bondverfahrens mit Anschlußflecken (20, 21) auf dem Substrat (2) verbunden werden, welche Anschlußflecken (20, 21) mit dem integrierten Schaltkreis in Verbindung stehen;
- daß auf einer Seite der Flachspule (1) auf einem Teil der Flachspule (1) und/oder auf einer Seite des Substrats (2) (jeweils) eine elektrisch nichtleitende Klebeschicht (3) aufgebracht wird, und daß anschließend
- das Substrat (2) auf die Klebeschicht (3) der Flachspule (1)
oder
- das mit einer Klebeschicht versehene Substrat mit der Klebeschicht auf der Flachspule
oder
- das mit der Klebeschicht versehene Substrat mit der Klebeschicht auf die entsprechende Klebeschicht der Flachspule aufgebracht wird.

18. Verfahren nach Anspruch 17, dadurch gekennzeichnet, daß das Substrat (2) auf seiner den integrierten Schaltkreis tragenden Seite mit der Flachspule (1) verklebt wird.

19. Verfahren nach einem der Ansprüche 17 oder 18, dadurch gekennzeichnet, daß als Klebeschicht(en) ein mit einem Kleber getränktes Gewebe, vorzugsweise Glasfasergewebe, oder ein doppelseitig klebendes Klebeband oder eine nach Aufbringung aushärtende Klebemasse, vorzugsweise bestehend aus einem Elektronikschaltungskleber, oder eine nach Aufbringung aushärtende Vergußmaterialmasse, vorzugsweise bestehend auf einem Kunstharz- oder Epoxydharzmaterial, verwendet wird.

20. Verfahren nach einem der Ansprüche 17 bis 19, dadurch gekennzeichnet daß die Flachspule (1) mit dem aufgeklebten Substrat (2) anschließend zwischen zwei Folien einlaminiert wird.

21. Verfahren nach einem der Ansprüche 17 bis 20, dadurch gekennzeichnet, daß als Bondverfahren ein direktes Bondverfahren, vorzugsweise ein Thermokompressionsschweißverfahren oder ein Ultraschallschweißverfahren verwendet wird.

22. Verfahren nach einem der Ansprüche 17 bis 21, zur Herstellung einer gehäusten Transponderanordnung nach einem der Ansprüche 1 bis 16, dadurch gekennzeichnet,
- daß die ungehäuste Transponderanordnung (1-3) in eine entsprechend konturierte Aufnahme (6) eines Gehäuses (4) eingebracht wird und
- daß anschließend die Aufnahme (6) mit einem Deckel (5) verschlossen wird.

23. Verfahren nach Anspruch 22, dadurch gekennzeichnet, daß das Gehäuse (4) aus Thermoplastmaterial besteht und der Deckel (5) mittels eines Ultraschallschweißverfahrens mit dem Gehäuse (4) dauerhaft verbunden wird.

24. Verfahren nach einem der Ansprüche 22 oder 23, dadurch gekennzeichnet, daß in den Deckel (5) ein Loch (50) eingebracht wird, das sich über der durch die Aufnahme (6) gebildeten Öffnung (60) befindet.
